# EUROPÄISCHE PATENTANMELDUNG

(11) **EP 2 058 437 A1**
(43) Veröffentlichungstag der Anmeldung: **13.05.2009**
(21) Anmeldenummer: 08019486.3
(22) Anmeldetag: 07.11.2008
(51) Int. Cl.: E02B 3/10

(54) **Anlage zum Hochwasserschutz und zur Regulierung von Hochwasser**

(30) Priorität: 08.11.2007 DE 102007053585
(71) Anmelder: Schütze, Harald, 01623 Lommatzsch (DE)
(72) Erfinder: Schütze, Harald, 01623 Lommatzsch (DE)
(74) Vertreter: Dinter, Tilo

(57) **Zusammenfassung**

Die Erfindung betrifft eine Anlage zum Schutz vor Hochwasser in Geländeregionen mit geringen bzw. mittleren Erderhebungen. Insbesondere kommt die Anlage zur Regulierung der Ausbreitung des Hochwassers über große Ebenen und landwirtschaftlich genutzte Flächen sowie der Verminderung der Schadwirkungen zur Anwendung. Aufgabe der Erfindung ist es, eine Anlage für den Hochwasserschutz zu schaffen, die eine Regulierung des Hochwassers ermöglicht, mit optimalen materiellen Einsatz eine größtmögliche Reduzierung des entstehenden Schadens bewirkt und dabei das ökologische Gleichgewicht erhält. Gelöst wird diese Aufgabe dadurch, dass mindestens eine zur Regelung der Abflussmengen von Gewässern dienende kaskadenförmige Anordnung von Staudämmen (1;2;3) entlang der Abfluss- und/oder Ausbreitungswege der Gewässer angeordnet ist. Vorteilhaft wird die Höhe, die Beschaffenheit und der Anordnungsort des jeweiligen Staudammes (1;2;3) auf der Basis von computergestützten digitalen Geländemodellen und simulierten Abflussmengen bei Hochwasser ermittelt. Die vorzugsweise aus Erddämmen bestehenden Staudämme weisen Abfhissemnehtungen (5;6;7) und Hochwaaserüberläufe auf, die den natürlichen Weg von im oder am Wasser lebenden Tieren nicht behindern.

## Beschreibung

Die Erfindung betrifft eine Anlage zum Schutz vor Hochwasser in Geländeregionen mit geringen bzw. mittleren Erderhebungen. Insbesondere kommt die Anlage zur Regulierung von Hochwasser zur Anwendung, die eine Ausbreitung des Hochwassers über große Ebenen und landwirtschaftlich genutzten Flächen reguliert und dadurch Hochwasserschäden stark vermindert.

Bekannt sind Anlagen zum Regulieren von Hochwasser in Bergregionen, die im oberen Bergbereich angelegt werden. So wird in der DE 19 2005 013 319 Al eine Anlage beschrieben, bei der ein Gürtel von Stauzisternen oberhalb der Baumgrenze angelegt wird, die Niederschlagswasser sammeln und so lange zurückhalten, bis die Hochwassergefahr vorbei ist. Dazu werden großflächig von Bergen herabfließende Mengen von Wasser den Eingängen der Zisternen zugeleitet und das Wasser gespeichert, bis die Hochwassergefahr vorbei ist. Schäden entlang der Abflusswege des Hochwassers und in niederen Regionen werden so verringert.

Nachteilig an dieser Anlage ist jedoch, dass entstehendes Hochwasser durch Starkniederschläge und sclineeschmelzen unterhalb dieser Bergregionen, insbesondere in den Regionen mit geringeren Erderhebungen nicht verhindert bzw. reguliert werden können.

Die Aufgabe der Erfindung besteht deshalb in der Schaffung einer Anlage für den Hochwasserschutz in großflächigen Geländen, die eine derartige Regulierung des Hochwassers ermöglicht, dass mit optimalen materiellen Einsatz eine größtmögliche Reduzierung des entstehenden Schadens in der zu schützenden Region erreicht wird und dabei das ökologische Gleichgewicht erhalten bleibt. Gelöst wird diese Aufgabe durch die Anlage entsprechen der beichreibenden technischen Merkmale des Patentanspruches 1. Vorteilhafte Weiterbildungen der Anlage werden mit den Merkmalen der Patentansprüche 2 bis 8 beschrieben.

Innerhalb der Anlage sind unter Ausnutzung der jeweiligen topografischen Geländebedingungen die optimalen Anordnungspunkte für die zum Hochwasserschutz dienende Staudämme durch Simulation anhand digitaler Geländemodelle festgelegt worden. Ausgehend von den zu erwartenden Abflussmengen wird anhand der digitalen Modellierung des Gewässersystems eine Simulation des Abflussverhaltens vorgenommen. Der Ort, die Höhe und die Beschaffenheit der Staudämme werden den zu erwartenden Hochwassermengen angepasst und die erforderliche Abflussmengen der Staudämme in Abhängigkeit vom jeweiligen Staudruck des angestauten Hochwasser reguliert.

Schäden in Folge von Hydroerosionen werden durch die geschaffene Anlage und deren regulierenden Wirkung auf den Abfluss der Hochwasserfluten auf ein Minimum reduziert. Die Folgewirkungen der Überflutungen nach dem Abfluss der Hochwasserwellen, wie beispielsweise auftretende Schlammschichten aus gefügelosem Lehm auf landwirtschaftlichen Geländeflächen, werden durch die Anlage weitestgehend verhindert. Dabei wird bei einem gering gehaltenen technischen Aufwand für die Errichtung der Anlage die Beibehaltung des ökologischen Gleichgewichtes erreicht. Die natürlichen Wege der in und an den Gewässern lebenden Tiere werden durch den konstruktiven Aufbau der Anlage nicht unterbrochen und so ihr damit verbundener Lebensraum erhalten.

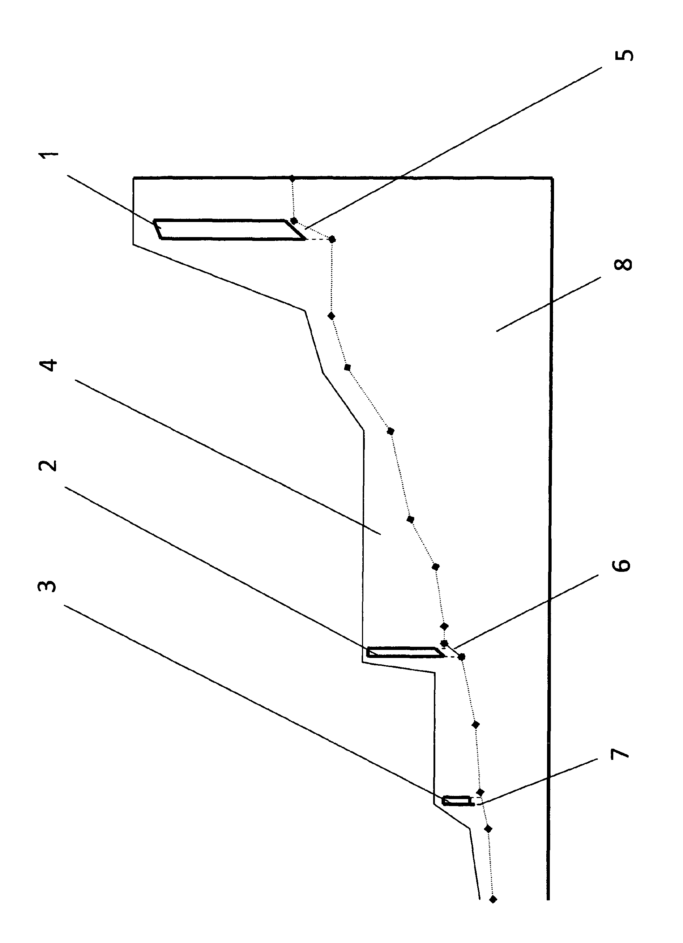

Nachfolgend soll die erfindungsgemäße Anlage anhand eines Ausführungsbeispieles näher erläutert werden. In der Zeichnung zeigt die dort dargestellte einzige Figur den bewirkten schematischen Verlauf des Hochwasserabflusses durch die kaskadeförmigen Anordnung der Staudämme entlang eines Abflussweges.

Die Ermittlung der Aufstellungsorte der Staudämme 1, 2, 3 entlang des Abflussweges innerhalb des Gewässersystems erfolgt mittels an sich bekannter mathematischer Geländemodelle. Mit diesen digitalen Modellen kann das Strömungsverhalten in verzweigten Fließgewässersystemen für statische als auch für dynamische Situationen berechnet werden. Dabei werden Wasserstandshöhen, Abflussmengen und mittlere Fließgeschwindigkeiten innerhalb der einzelnen Gewässerquerschnittc ermittelt. Für die Vorgabe der Abflussmengen werden die von zentralen Wetterstationen erfassten jährlichen Niederschlagsmengen für das jeweilige Gebiet und Statistiken über Starkniederschlagsereignissc zurückliegender Jahrzehnte herangezogen. Unter Berücksichtigung der ermittelten Überflutungsflächen und vorhandenen Höhenunterschiede des einbezogenen Geländemodells, werden die optimalen Standorte der Staudämme 1, 2, 3 ermittelt. Die optimale Höhe und die erforderliche Beschaffenheit (Zusammensetzung) der Staudämme 1, 2, 3 werden unter Einbeziehung des zu erwartenden maximalen Staudruckes des Hochwassers 4 bestimmt. Als realisierbare Lösungen kommen Staudämme 1, 2, 3 mit einer maximalen Höhe von zwei Meter in Betracht, die senkrecht zum Gewässerbett angeordnet sind. Die ersten Staudämme 1 stauen den größten Anteil des Abflusses. Nach einer Überflutung des ersten Staudammes 1 nehmen die folgenden Staudämme 2 und 3 nur den überströmenden Abfluss und den zusätzlichen Abfluss aus ihren eigenen Einzugsgebieten auf. Die Hochwasserereignisse treten entweder durch Starkniederschläge oder durch plötzliche Schneeschmelzen im Frühjahr auf. Insbesondere die Starkniederschläge und die damit verbundenen unmittelbaren Abflüsse in das Gewässer führen zu plötzliche Hochwasserereignissen, die nur von kurzer Dauer sind. Es erweist sich deshalb als vorteilhaft, statt Hochwasserschutzdämme über das Gelände verteilte optimal angeordnete Staudämme 1, 2, 3 zu errichten. Dabei liegen die ermittelten optimalen Anordnungspunkte nicht nur abwärts einer linienförmigen Abflussstrecke, sondern sind über das gesamte einbezogene Geländegebiet verteilt. Der jeweilige durch das Hochwasser hervorgerufene mengenmäßige Überlauf an den einzelnen Staudämmen 1, 2, 3 ist bewusst in die Bemessung bzw. Berechnung der Staudammparameter eingezogen. Die unterschiedliche Ausbildung der Staudämme 1, 2, 3 an den flächenmäßig unterschiedlichen Standorten ermöglicht so insgesamt einen regulierten und annähernd gleichmäßigen Abfluss des auftretenden Hochwassers. Kurzfristig auftretende Überflutungen durch Starkrcgen oder Schneeschmelzen bewirken somit eine durch die Anlage regulierte Anhebung aller Abflussmengen der Abflusswege des Gewässersystems ohne den natürlichen Abflussweg zu unterbrechen.

Im Hochwasserfall wird so das Wasser optimal zurückgehalten und erst nach dem Abklingen des Hochwasser allmählich den unterliegenden Gewässersystemen zugeführt. Der durch Erosion abgetragene Boden im Entstehungsgebiet kann dadurch gehalten werden. Schäden des landwirtschaftlich genutzten Gebietes und angrenzender Siedlungsgebiete werden minimiert.

Der ständige und bei auftretenden Hochwasser regulierte Abfluss der Gewässersysteme wird mittels der am unteren Ende der Staudämme 1, 2, 3 angebrachten Abflusseinrichtungen 5, 6, 7 bewirkt. Je nach vorhandenem Staudruck des auftretenden Hochwassers 4 wird die Abflussmenge gesteuert. Bei normale durchschnittlichem Abfluss des Gewässer kann die gesamte Wassermenge die Abflussöffnung des jeweiligen Staudammes 1, 2, 3 ungehindert passieren. Dabei ist der Gesamtraum des Abflusskanales größer als der unter normalen Umständen erforderliche Raum für die Abflussmengen. Steigt die Menge des abfließenden Wassers infolge von Starkregen oder Schneeschmelze, so wird die Menge des durch die Abflussöffnungcn fließende Wassers bis zur Erreichung des überlaufenden Zustandes durch steuerbare Ventile der Abflusseinrichtungen 5, 6, 7 geregelt. Der durch das mathematische Geländemodell ermittelte optimale Abflussvorgang kann so unterstützend reguliert werden. Das für die Staudämme 1, 2, 3 hauptsächlich zur Anwendung kommende Baumaterial besteht aus dem Erdstoff, der von ortsnahen Entnahmestellen entnommen wurde. Für die Erddämme wird vorzugsweise eine Böschungsneigung von 1:10 gewählt, um die Befahrbarkeit der Böschung mit landwirtschaftlichen Arbeitsmaschinen zu gewährleisten. Der Aufbau der Erddämme erfolgt durch übereinander angeordneter Lagen des Erdbodens. Nach dem Auftrag jeder Lage wird eine Verdichtung der Lagenschicht durchgeführt, die beispielsweise durch einen Planiervorgang vorgenommen werden kann. Nach Erreichung der erforderlichen Höhe des Dammes wird die Böschung mit einer Mutterbodenabdeckung und einer Bepflanzung versehen. Als Hochwasserüberlauf wird im Bereich der Dammkrone eine Abflussweg eingebracht, der mit einer aus Beton bestehenden Einfassung begrenzt wird. Die im unteren Bereich des Dammes angeordneten Abflusseinrichtungen 5, 6, 7 sind als Kanäle ausgebildet, die aus Betonmaterial bestehende Wände aufweise. In der Nähe der Staudämme liegende, entsprechend der natürlichen Geländeausbildung vorhandene, Mulden sind mittels sogenannter Dränleitungen mit dem jeweiligen Damm verbunden. Zwecks Entwässerung werden die sich darin ansammelnde Wassermengen durch den Damm und Drängen in das Gewässersystem geleitet.

### Bezugszeichen

- 1: Staudamm
- 2: Staudamm
- 3: Staudamm
- 4: Hochwasser
- 5: Abflusseinrichtung
- 6: Abflusseinrichtung
- 7: Abflusseinrichtung
- 8: Geländequerschnitt

## Patentansprüche

1. Anlage zum Hochwasserschutz und zur Regulierung von Hochwasser mittels Schutz- bzw. Rückhaltedämmen, **dadurch gekennzeichnet, dass** mindestens eine zur Regelung der Abflussmengen von Gewässern dienende kaskadenförmige Anordnung von Staudämmen (1;2;3) entlang der Abfluss- und/oder Ausbrcitungswege der Gewässer angeordnet ist.

2. Anlage nach Patentanspruch 1, **dadurch gekennzeichnet, dass** die Höhe, die Beschaffenheit und der Anordnungsort des jeweiligen Staudammes (1;2;3) den ermittelten optimalen Werten auf der Basis computergestützter Gewässer- und Geländemodelle und daran simulierten Abflussmengen bei Hochwasser entspricht.

3. Anlage nach Patentanspruch 1, **dadurch gekennzeichnet, dass** mindestens ein Staudamm (1;2;3) eine in funktioneller Abhängigkeit vom vorhandenen Staudruck die Abflussmenge regulierende Abflusseinrichtung (5;6;7) aufweist.

4. Anlage nach den Patentansprüchen 1 bis 3, **dadurch gekennzeichnet, dass** die Staudämme (1;2;3) aus schichtweise aufgetragenem Bodenmaterial des ortsnahen Bereiches der jeweiligen Staudamm bestehen.

5. Anlage nach den Patentansprüchen 1 bis 4, **dadurch gekennzeichnet, dass** die maximale Böschungsncigung der Staudämme (1;2;3) der für den Arbeitsablauf maximal möglichen Neigung der Arbeitsfläche der zur Anwendung kommenden landwirtschaftlichen Arbeitsmaschinen entspricht.

6. Anlage nach Patentanspruch 1, **dadurch gekennzeichnet, dass** seitlich der Staudämme (1;2;3) vorhandene Bodenmulden über Dränleitungen durch die Staudämme (1;2;3) oder deren Staubereich hindurch mit dem Gewässerbett verbunden sind.

7. Anlage nach Patentanspruch 1, **dadurch gekennzeichnet, dass** als Hochwasserüberlauf dienende Wasserwege im Bereich der Dammkrone der Staudämme (1;2;3) eingebracht sind und diese jeweils eine aus Beton gefertigte Einfassung und/oder Wasserpflaster aufweisen.

8. Anlage nach den Patentansprüchen 1 und 3, **dadurch gekennzeichnet, dass** die als Kanäle ausgebildeten Abflusseinrichtungen (5;6;7) in der gleichen vertikalen Achse wie die Hochwasserüberlaufe angeordnet sind und Kanalwandungen aus Betonmaterial aufweisen.
